# EUROPEAN PATENT SPECIFICATION

(11) **EP 2 176 300 B1**
(45) Date of publication and mention of the grant of the patent: **22.08.2012**
(21) Application number: 08785939.3
(22) Date of filing: 07.07.2008
(51) Int. Cl.: C08F 10/00, C08F 10/06, C08F 2/12

(54) **PROCESS FOR THE POLYMERIZATION OF OLEFINS**
VERFAHREN ZUR POLYMERISIERUNG VON OLEFINEN
PROCÉDÉ DE POLYMÉRISATION DES OLÉFINES

(30) Priority: 18.07.2007 EP 07112694
(43) Date of publication of application: 21.04.2010
(73) Proprietor: Basell Poliolefine Italia S.r.l., 20127 Milano (IT)
(72) Inventor: GOVONI, Gabriele, 44045 Renazzo (FE) (IT); PATRONCINI, Giovanni, 44100 Ferrara (IT)
(74) Representative: Colucci, Giuseppe
(86) International application number: PCT/EP2008/058751
(87) International publication number: WO 2009/010413

(56) References cited:
- EP-A- 0 560 035
- CA-A1- 2 088 524
- US-A- 3 412 779
- US-A- 4 739 015

## Description

The present invention relates to a process for the slurry polymerization of olefins. In particular, the invention relates to a process for the slurry polymerization of olefins in a reactor using liquid monomer as polymerization medium, and comprising the use of an antifouling agent added to the slurry discharged from the polymerization reactor.

The polymerization of olefins in a reactor wherein a polymerization slurry is formed by the solid polymer and the liquid monomers has been known for many years. Slurry polymerization processes using a liquid monomer, such as liquid propylene, as the polymerization medium allow to maximize the rate of the polymerization reaction by providing high monomer concentration. However, they are not well suited for the production of copolymers of propylene with ethylene and/or other α-olefins, when the amount of comonomer is such that the copolymer becomes soluble in liquid propylene.

It has also been widely used a multistage polymerization process comprising one or two slurry polymerization reactors and one or more gas-phase reactors connected successively to each other to produce random and/or impact copolymers of propylene, thereby expanding and modifying some mechanical and physical properties of conventional polypropylene products. When transferred from the slurry polymerization reactor, targeted to produce a propylene homopolymer, to a successive gas-phase reactor, targeted to produce a copolymer of propylene with another α-olefin, the polyolefin continues to grow on the polymer granules coming from the previous polymerization reactor. In a conventional slurry polymerization process the slurry of polymer and liquid propylene discharged from the reactor is depressurized and flashed at a pressure such to volatilize the liquid monomer.

US 4,739,015 discloses a process for producing propylene block copolymers in which adhesion of polymer particles each other and to the inner wall of the polymerization apparatus is reduced by using a regulated amount of an oxygen containing compound which is gaseous in a standard condition, or an active hydrogen-containing compound which is liquid or solid in a standard condition. In case of random copolymerization of propylene carried out in the gaseous phase, said oxygen containing compound is directly fed into the random polymerization system, preferably by introducing it into a pipe for feeding gaseous material (column 8, line 34-44). The active hydrogen-containing compound may be directly introduced in such a random copolymerization system, or may be fed after dilution with a solvent, such as butane or hexane. The direct introduction into the gas-phase reactor of the anti-fouling compound, as taught by US 4,739,015, is undesirable because unbalanced polymerization conditions can occur in the reaction zone close to the point of introduction.

EP 560035 discloses a polymerization process in which an anti-fouling compound is used to eliminate or reduce build-up of polymer particles on the walls of the reactors, or formation of agglomerates of polymer particles, which may cause clogging in the gas distribution plate of gas-phase reactors, or more generally causing fouling of pipes or plant parts and components. The anti-fouling compound can be fed at any stage of the gas-phase polymerization process in an amount greater than 100 ppm by weight with respect to the produced (co)polymer. Said anti-fouling compound is capable, when used in a standard polymerization test of ethylene and polypropylene mixture, to selectively inhibit the polymerization on polymer particles smaller than 850 µm, the latter being responsible of fouling problems and polymer sheeting. Example 12 of EP 560035 refers to a multistage polymerization carried in a sequence of a slurry loop reactor and two gas-phase polymerization reactors, where the polymer suspension exiting the loop reactor is passed through a flash tube heated with steam, with consequent evaporation of the unreacted propylene. According to this example the anti-fouling compound is directly fed to said flash tube at a flow rate of 60 kg/h, while liquid propylene is fed to the slurry loop reactor at a flow rate of 90 kg/hour: the ratio between the feed rate of the antifouling compound and propylene is thus of about 0.67. The significantly high amount of antifouling compound used in this example is undesirable for potentially strong inhibition effect on polymerization activity of the catalyst.

There is the need to find the best operative conditions in a slurry olefin polymerization in order to maximize the anti-fouling effect when adding an antistatic compound to the polymer slurry.

The Applicant has now found that the above teaching of EP 560035, that is the feed of the antistatic compound directly to the flash tube, does not give the best results as regards the incorporation of the antistatic compound on the polymer particles.

It is therefore an object of the present invention a process for the polymerization of olefins comprising:
a) polymerizing at least a liquid olefin monomer in a polymerization reactor to form a polymerization slurry comprising a polyolefin and said liquid monomer;
b) continuously transferring the polymerization slurry from the polymerization reactor to a flash chamber by means of a transfer line comprising a pipe where a turbulent flow of a tri-phase stream comprising polymer, liquid monomers, and gaseous monomers is established;
c) separating the evaporated monomer from the polymer in said flash chamber. the process being characterized in that an anti-fouling agent in a liquid form is continuously introduced upstream the inlet of said pipe of step b).

The olefin polymerization step a) of present invention comprises at least a reactor for the slurry polymerization of olefins in the presence of liquid monomer. The polymerization step a) may comprise also a sequence of two interconnected slurry polymerization reactors. The slurry polymerization using the liquid monomer as the polymerization medium allows to maximize the rate of the polymerization reaction by providing a high monomer concentration, and to simplify the process by eliminating use of solvents or diluents that must be purified and recycled. Such polymerization may be carried out in a stirred tank with a jacketed wall to remove the heat of polymerization, or in a jacketed loop reactor, which provides a high ratio of cooling area to reactor volume. The polymerization step a) is preferably carried out in a loop reactor operated at a pressure of from 22 to 50 bar, preferably from 30 to 45 bar. The polymerization temperature in the loop reactor of step a) ranges from 60 to 90°C, preferably from 70 to 85°C.

In case of propylene polymerization, a liquid mixture comprising propylene, hydrogen as molecular weight regulator, and optionally an inert hydrocarbon, is fed to the loop reactor in the presence of a highly active catalyst of the Ziegler-Natta or metallocene type. Preferably, the polymerization is carried out at low concentrations of the inert hydrocarbon, so that liquid propylene is substantially the reaction medium (bulk polymerization). In the loop reactor the propylene concentration is comprised between 60 and 100% by weight, preferably between 75 and 95%, based on the total amount of liquid present in the reactor. The remaining part of liquid comprises the inert hydrocarbon, hydrogen and one or more α-olefin comonomers, if any. The preferred comonomer is ethylene. A polypropylene slurry is discharged from the loop reactor and is fed to the transfer line of step b).

The mixture comprising the polymer particles and the liquid medium coming from the polymerization reactor is conveyed to a flash chamber, where said mixture is flashed at a pressure lower the one existing in the polymerization reactor: accordingly, the monomers evaporation is involved with the consequent separation of the polymer particles from the evaporated monomers. In step c) of the process of the invention the flash chamber is operated at a pressure ranging from 12 to 24 bar, preferably from 16 to 20 bar.

The term "anti-fouling agent" as used in the present description includes:
- antistatic substances capable of neutralizing the electrostatic charges of the polymer particles;
- catalyst deactivators that partially deactivate the aluminium alkyl co-catalyst, provided that they do not substantially inhibit the overall polymerization activity.

Consequently, an "anti-fouling agent" according to the invention is any substance that is capable to prevent, eliminate or substantially reduce the formation of build-up of polymer on any part of the polymerization plant, including sheeting of walls of such apparatuses and any parts thereof, or deposits of polymer agglomerates on any such apparatuses and parts thereof. According to the present invention, a liquid anti-fouling agent is added to the polymerization plant in a specific portion of the transfer line connecting the slurry polymerization reactor to the flash chamber.

In particular, the feeding of the anti-fouling agent is carried out at any point situated upstream a pipe characterized by a highly turbulent regime. A turbulent flow of a tri-phase stream comprising polymer, liquid monomers, and gaseous monomers is generated inside said pipe, with the proviso that at least one of the Reynolds numbers of vapour phase Re₍ᵥₐₚ₎ or liquid phase Re_{(liq)} is higher than 2.000.000, preferably comprised between 3.000.000 and 12.000.000.

As known, the Reynolds number of a fluid flowing in a pipe is defined as ρvD/µ, wherein p=fluid density; v=fluid velocity; D= pipe diameter; µ= fluid dynamic viscosity.

In the peculiar case of present invention, both a gas and a liquid flow simultaneously inside the pipe of the transfer line, so that the above Reynolds numbers Re₍ᵥₐₚ₎ and Re_{(liq)} can be defined as follows:
- Re_{(liq)} can be defined as ρ_{liq}V_{liq}D/µ_{liq} ,where ρ_{liq}= density of liquid phase, V_{liq} = velocity of liquid phase, µ_{liq}= dynamic viscosity of the liquid phase, D= pipe diameter.
- Re₍ᵥₐₚ₎ can be defined as ρᵥₐₚ VᵥₐₚD/µᵥₐₚ ,where ρᵥₐₚ= density of vapour phase, Vᵥₐₚ = velocity of vapour phase, µᵥₐₚ dynamic viscosity of the vapour phase, D= pipe diameter.

The high turbulence inside the pipe belonging to the transfer line of step b) is achieved by heating the polymer slurry in said pipe, so as to evaporate the liquid medium and causing the formation of a tri-phase stream of solid polymer, liquid monomers, and gaseous monomers. Inside the pipe of step b) the temperature is increased to a value above the polymerization temperature and below the sticking temperature of the polyolefin. Generally, along the pipe of step b) the temperature is increased to a value in a range from 80°C to 100°C.

The positive results of the present invention in term of incorporation of the antifouling compound inside the polymer particles may be correlated to the following reasons:
A) the liquid antistatic compound is introduced at a feeding point of the process wherein the monomers evaporation is not yet occurred, so that a quick solubility of the antistatic compound in the liquid phase is favoured;
B) the liquid phase acts as a dispersing medium and its successive evaporation contributes to incorporate in a homogeneous way the antistatic compound on the solid polymer particles, the homogeneity being increased by the high turbulence of the tri-phase stream flowing inside the pipe.

The high level of incorporation of the antifouling compound on the polymer particles reduces sheeting and formation of polymer agglomerates on the walls of the flash chamber and in the equipment situated downstream the flash chamber. On the contrary, it has been observed that when the liquid anti-fouling agent is fed at a point situated along the pipe of step b) or downstream said pipe, satisfactory results in term of fouling prevention are not achieved. The comparative polymerization runs enclosed in this patent application show the incipient formation of polymer sheeting on the walls of the flash chamber. Without to be bound to any theory, probably this is due to the fact that the liquid antifouling compound enters in contact mainly with the vapour phase and the liquid phase cannot act as a dispersing medium, so that the dispersion of the antistatic compound on the solid polymer is not homogeneous.

In view of the above explanation, the claimed process of adding an anti-fouling agent to polymer slurry maximises the anti-static effect of neutralizing electrostatic charges on the polymer particles and allows an improved working of the flash chamber.

The liquid anti-fouling agent of present invention is added to the polymerization slurry in an amount of from about 5 · 10⁻⁵ to 50 · 10⁻⁵ % by weight with respect to the total monomers fed to the polymerization step a).

In general, all antistatic agents which are suitable for polymerization processes may be used in the present invention. Examples are salt mixtures comprising calcium salts of medialanic acid and chromium salts of N-stearylanthranilic acid, as described in DE-A 3543360. Commercially available products, such as Stadis^{®} 450 from Du Pont, a mixture of toluene, isopropanol, dodecylbenzenesulfonic acid, a polyamine, a copolymer of dec-1-en and SO2, and dec-1-en or ASA-3 from Shell, may also be used.

Other suitable antistatic agents are C12 -C22 fatty acid soaps of alkali metals or alkaline earth metals, salts of sulfonic esters of the general formula (RR')-CHOSO3 Me, esters of polyethylene glycols with fatty acids, polyoxyethylene alkyl ethers, etc. An overview of antistatic agents suitable for polymerization processes is also given in EP 107127.

The anti-fouling agent can be selected from one or more of the following classes:
(1) Fatty acid soaps represented by the general formula R-COOM, wherein R is a saturated or unsaturated hydrocarbon radical having 12 to 22 carbon atoms, and M is an alkali or alkaline earth metal;
(2) Salts of sulfuric acid esters of higher alcohols represented by the general formula ROS0₃M, wherein R is a saturated or unsaturated hydrocarbon radical having 12 to 22 carbon atoms, and M is an alkali or alkaline earth metal;
(3) Salts of sulfuric acid esters of higher secondary alcohols represented by the general formula 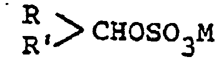 wherein R and R' may be the same or different and are selected from saturated or unsaturated hydrocarbon radical having 12 to 22 carbon atoms, M is an alkali or alkaline earth metal;
(4) Salts of sulfuric acid esters of higher fatty acid alkylolamides represented by the general formula 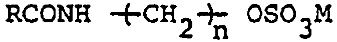 wherein R is a saturated or unsaturated hydrocarbon radical having 12 to 22 carbon atoms, and n is a number from 1 to 10;
(5) Compounds represented by the general formula 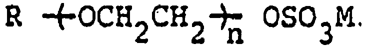 wherein R, M and n are the same as above defined;
(6) Salts of (higher alkyl) sulfonic acids represented by the general formula RS0₃M
   wherein R, M and n are the same as above defined;
(7) Salts of alkylarylsulfonic acids;
(8) Alkali or alkaline earth metal salts of dialkylsulfosuccinic acids;
(9) Alkali or alkaline earth metal salts of partial esters of higher alcohols with phosphoric acid;
(10) Salts of primary amines represented by the general formula

   [R-NH₃]⁺A⁻

   wherein A is chlorine, bromine or other halogen atoms, or 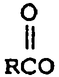
(11) Quaternary ammonium salts represented by the general formula 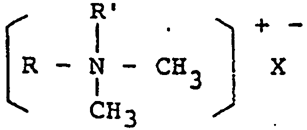 wherein X represents a halogen atom (the same applies hereinafter);
(12) Compounds of the alkylaminesulfonic acid type represented by the general formula 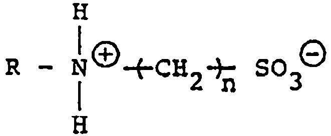
(13) Polyoxyethylene alkyl ethers represented by the general formula

   R-O(CH₂CH₂O)ₙ₋₁CH₂CH₂OH
(14) Compounds represented by the general formula 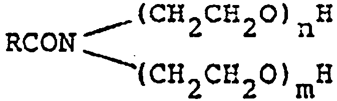 wherein R is a saturated or unsaturated hydrocarbon radical having 4 to 22 carbon atoms; n and m, which may be the same or different, are numbers of from 1 to 10 (the same applies hereinafter);
(15) Compounds represented by the general formula 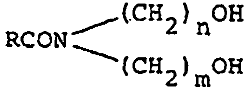
(16) alkyldiethanolammines of formula R-N(CH₂CH₂OH)₂ wherein R is an alkyl radical comprised between 10 and 20 carbon atoms, preferably between 12 and 18 carbon atoms;
(17) Polyalcohols having from 4 to 8 carbon atoms;
(18) Hydroxyesters with at least two free hydroxyl groups, obtained from carboxylic acids with from 8 to 22 carbon atoms and from polyalcohols;
(19) Polyepoxidate oils, such as epoxidate linseed oil and epoxidate soya oil; representative compounds are products sold under the trademarks Edenol D82^{®} and Edenol B316^{®}.
(20) Amides of formula R-CONR'R"; wherein R, R', and R" may be the same or different and is a saturated or unsaturated hydrocarbon radical having 1 to 22 carbon atoms;

Preferred anti-fouling agents used in the process of the present invention are the compounds belonging to the above classes (16), (17), (18), (19) and (20).

Among the compounds of class (16) particularly preferred antistatic compounds are alkydiethanolamines, wherein the alkyl group has from 10 to 18 carbon atoms. A preferred compound is a commercial product sold under the trademark ATMER163^{®} (mixture of alkyldiethanolammines of formula R-N(CH₂CH₂OH)₂ where R is an alkyl radical C₁₂-C₁₈). When propylene is polymerised in the slurry polymerization reactor and ATMER163^{®} is used as anti-fouling agent, the latter is added in an amount of from 8 · 10⁻⁴ to 30 · 10⁻⁴ % by weight with respect to propylene, preferably in an amount of from 10 · 10⁻⁴ % to 20 · 10⁻⁴ % by weight with respect to propylene.

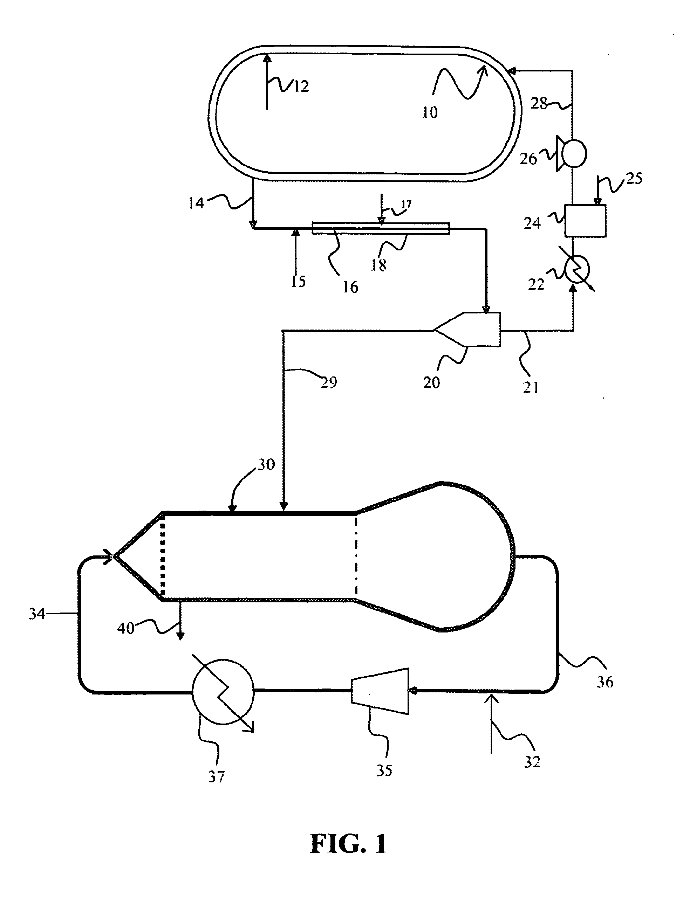

The process of the invention is illustrated also by means of Figure 1, which is a simplified diagram representing a preferred but non-limiting embodiment of the invention.

In such embodiment, the slurry polymerization of liquid propylene is carried out in a loop reactor 10. Schematically, catalyst components, co-catalyst, and propylene are introduced into the loop reactor, as shown by arrow 12. In the case of use of a Ziegler/Natta catalyst comprising a solid component supported on active MgCl₂, the solid component can be fed as such or preferably in a pre-polymerised form.

Loop reactor 10 may be the first polymerization reactor of the process, or there can be other reactor(s) upstream reactor 10. For the purposes of the present description, reactor 10 can receive from line 12 a polymer produced in other upstream reactor(s) or a prepolymer and/or a polymerization catalyst or catalyst component. In the simplified drawing of Figure 1 feed lines for catalyst, monomer, molecular weight regulator and other possible ingredients have been omitted, since they are known to the person skilled in the art.

Most of the polymer slurry is continuously recirculated in the loop reactor 10, but a fraction of it is continuously discharged to a transfer line 14, connected to a flash chamber 20. The transfer line 14 comprises a pipe 16 equipped with heating means 18, for example a steam jacketed pipe. Upon discharge from reactor 10 the polymer slurry is depressurised, and during conveyance through pipe 16 of transfer line 14 the slurry is heated and brought to a temperature higher than the temperature within the loop reactor 10. Under these conditions liquid propylene is evaporated and a turbulent flow of a tri-phase stream comprising polymer, liquid monomers, and gaseous monomers is generated inside the pipe 16.

According to the invention, an.anti-fouling agent selected from the classes (1) to (35) above is added to the polymerization slurry at a point 15, downstream the discharge from the loop reactor 10 and upstream the inlet of jacketed pipe 16.

According to an embodiment outside the claimed process, the anti-fouling agent may be fed via line 17 to the tri-phase stream flowing along the pipe 16: this embodiment is put into practice in the comparative polymerization runs of the experimental section to support the technical effect of the present invention.

At the outlet of jacketed pipe 16 a two-phase stream containing evaporated monomers and polymer particles is conveyed to flash chamber 20, where the pressure is decreased: the particles of solid polymer fall by gravity towards the bottom of flash chamber 20, while the gaseous monomers flow upwards to the top of chamber 20, where are collected and sent via line 21 to a monomer recovery section comprising a cooler 22, a monomer make-up unit 24 and a compressor 26. Fresh propylene supplied as shown by arrow 25 and recycled propylene from flash chamber 20 are fed via 28 to loop reactor 10 for continued polymerization. Propylene homopolymer discharged from flash tank 20 is transferred via line 29 to a fluidised-bed gas-phase reactor 30, where a propylene copolymer, for example an ethylene propylene elastomeric copolymer, is generated on the homo-PP particles coming from the loop reactor 10. Reactor 30 is typically operated at a pressure comprised between 10 and 30 bar and at a temperature comprised between 50 and 110°C. Schematically, fresh monomers 32 are fed to reactor 30 through line 34, unreacted monomers are recycled through line 36 equipped with a compressor 35 and a heat exchanger 37 placed downstream the compressor 35, and the heterophasic copolymer or impact PP is discharged from line 40. Such product can be the end product of the polymerization process, thus it is transferred to the finishing section of the plant, or can be transferred to a second gas-phase reactor (not shown) for enrichment in the copolymer fraction.

The polymerization reaction can be carried out in the presence of highly active catalytic systems, such as Ziegler-Natta catalysts, single site catalysts, chromium-based catalysts, vanadium-based catalysts.

A Ziegler-Natta catalyst system comprises the catalysts obtained by the reaction of a transition metal compound of groups 4 to 10 of the Periodic Table of Elements (new notation) with an organometallic compound of group 1, 2, or 13 of the Periodic Table of element.

In particular, the transition metal compound can be selected among compounds ofTi, V, Zr, Cr, and Hf. Preferred compounds are those of formula Ti(OR)ₙX_{y-n} in which n is comprised between 0 and y; y is the valence of titanium; X is halogen and R is a hydrocarbon group having 1-10 carbon atoms or a COR group. Among them, particularly preferred are titanium compounds having at least one Ti-halogen bond such as titanium tetrahalides or halogenalcoholates. Preferred specific titanium compounds are TiCl₃, TiCl₄, Ti(OBu)₄, Ti(OBu)Cl₃, Ti(OBu)₂Cl₂, Ti(OBu)₃Cl.

Preferred organometallic compounds are the organo-Al compounds and in particular Al-alkyl compounds. The alkyl-Al compound is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides such as AlEt₂Cl and Al₂Et₃Cl₃ optionally in mixture with said trialkyl aluminum compounds.

Particularly suitable high yield ZN catalysts are those wherein the titanium compound is supported on magnesium halide in active form which is preferably MgCl₂ in active form. Particularly for the preparation crystalline polymers of CH₂CHR olefins, where R is a C1 C10 hydrocarbon group, internal electron donor compounds can be supported on the MgCl₂. Typically, they can be selected among esters, ethers, amines, and ketones. In particular, the use of compounds belonging to 1,3-diethers, cyclic ethers, phthalates, benzoates, acetates and succinates is preferred.

When it is desired to obtain a highly isotactic crystalline polypropylene, it is advisable to use, besides the electron-donor present in the solid catalytic component, an external electron-donor (ED) added to the aluminium alkyl co-catalyst component or to the polymerization reactor. These external electron donors can be selected among alcohols, glycols, esters, ketones, amines, amides, nitriles, alkoxysilanes and ethers. The electron donor compounds (ED) can be used alone or in mixture with each other. Preferably the ED compound is selected among aliphatic ethers, esters and alkoxysilanes. Preferred ethers are the C2-C20 aliphatic ethers and in particular the cyclic ethers preferably having 3-5 carbon atoms, such as tetrahydrofurane (THF), dioxane.

Preferred esters are the alkyl esters of C1-C20 aliphatic carboxylic acids and in particular C1-C8 alkyl esters of aliphatic mono carboxylic acids such as ethylacetate, methyl formate, ethylformiate, methylacetate, propylacetate, i-propylacetate, n-butylacetate, i-butylacetate.

The preferred alkoxysilanes are of formula Rₐ¹R_{b}²Si(OR³)_{c}, where a and b are integer from 0 to 2, c is an integer from 1 to 3 and the sum (a+b+c) is 4; R¹, R², and R³, are alkyl, cycloalkyl or aryl radicals with 1-18 carbon atoms. Particularly preferred are the silicon compounds in which a is 1, b is 1, c is 2, at least one of R¹ and R² is selected from branched alkyl, cycloalkyl or aryl groups with 3-10 carbon atoms and R³ is a C₁-C₁₀ alkyl group, in particular methyl.

Other suitable polymerization catalysts to be used in the olefin polymerization of present invention are single site catalysts, for instance metallocene-based catalyst systems, and catalysts based on chromium compounds, such as chromium oxide on silica, also known as Phillips catalysts.

The catalyst may suitably be employed in the form of a pre-polymer powder prepared beforehand during a pre-polymerization stage with the aid of a catalyst as described above. The pre-polymerization may be carried out by any suitable process, for example, polymerization in a liquid hydrocarbon diluent or in the gas phase using a batch process, a semi-continuous process or a continuous process.

The following examples illustrate without limiting the effectiveness of the method of adding an anti-fouling agent in a slurry polymerization process according to the invention.

### EXAMPLE 1

### Catalyst Activation and Prepolymerization

Polypropylene is produced by means of slurry polymerization of the liquid monomer in a loop reactor.

A Ziegler-Natta catalyst is used as the polymerization catalyst, comprising:
- a titanium solid catalyst component prepared with the procedure described in WO 00/63261, Example 10, according to which diethyl 2,3-diisopropyl-succinate is used as an internal donor compound;
- triethylaluminium (TEAL) as a cocatalyst;
- cyclohexylmethyldimethoxysilane (CHMMS) as an external donor;

The above components were introduced into an activation vessel, with a weight ratio TEAL/(solid catalyst) of 10.5 and a weight ratio TEAL/CHMMS of 25. Propane as a diluent was also fed to the activation vessel 17.

The above components were pre-contacted in the activation vessel at a temperature of 10°C for 20 minutes.

The activated catalyst discharged from the activation vessel was continuously fed to a prepolymerization loop reactor together with liquid propylene. The prepolymerization in the loop reactor is operated at a temperature of 20°C and a residence time of 10 minutes.

### Polymerization -

The prepolymerized catalyst was discharged from the loop prepolymerizator and was continuously fed to a liquid loop reactor to produce polypropylene.

According to the embodiment shown in Fig. 1, propylene was polymerized in the loop reactor 10 using H₂ as the molecular weight regulator. No comonomer was fed to this reactor.

Liquid propylene at a flow rate of 24600 Kg/h was continuously fed to the loop reactor 10. Make-up propylene and hydrogen as molecular weight regulator were fed to the loop reactor 10 via line 25 and monomer make-up unit 24. The polymerization of propylene was carried out at a temperature of 70°C and at a pressure of 3.4 MPa.

A polypropylene slurry having a polymer concentration of 55% by weight is discharged from the loop reactor 10, and continuously flows through the transfer line 14 comprising a pipe 16, which is externally heated by a jacket in which hot steam is circulated.

The total length of the jacketed pipe 16 is 160 m and its diameter is not constant along its length, but it increases from an initial value of 80 mm at the inlet up to a final value of 100 mm at the outlet.

ATMER163^{®} (mixture of alkyldiethanolamines of formula R-N (CH₂CH₂OH)₂, wherein R is an alkyl radical C₁₂-C₁₈) is used as the anti-fouling agent in this example. This liquid compound is fed at a temperature of 25°C to the polymer slurry via line 15, located upstream the inlet of the jacketed pipe 16. The flow rate of ATMER163^{®} is equal to 4 Kg/h, corresponding to 16.2 · 10⁻⁵ % by weight with respect to the amount of propylene fed to the loop reactor 10.

After the addition with ATMER163^{®}, the polymer slurry enters the steam jacketed pipe 16, wherein it is heated up to reach a temperature of 85°C with consequent evaporation of the liquid phase. Accordingly, a tri-phase stream comprising solid polypropylene, liquid propylene and gaseous propylene flows at a high velocity through the steam jacketed pipe 16.

Along the length of the jacketed pipe 16 the values of Reynolds number relative to the flow of liquid propylene (Re_{liq}) and the flow of gaseous propylene (Reᵥₐₚ) were calculated by means of computer simulation.
Re_{(liq)} = ρ_{liq}V_{liq}D/µ_{liq} ,where ρ_{liq}=density of liquid phase, V_{liq} = velocity of liquid phase, µ_{liq}= dynamic viscosity of the liquid phase, D= pipe diameter;
Re₍ᵥₐₚ₎= = ρᵥₐₚVᵥₐₚD/µᵥₐₚ ,where ρᵥₐₚ= density of vapour phase, Vᵥₐₚ = velocity of vapour phase, µᵥₐₚ dynamic viscosity of the vapour phase, D= pipe diameter.

The computer simulation gave the following results in correspondence of some representative points along pipe 16:
Pipe inlet: **Re_{(liq)}= 2200000 Re₍ᵥₐₚ₎=0 (vapour is absent)**
1/3 of the pipe length (molar fraction of vapour phase xᵥₐₚ=0.479):
   **Re(_{liq)} = 1124100 Re₍ᵥₐₚ₎=10.422.000**
Pipe outlet: **Re_{(liq)}= 0 (liquid** is **absent) Re₍ᵥₐₚ₎=11.500.000**

It can be seen that the turbulent flow in the pipe of step b) is such that at least one of the Reynolds numbers of vapour phase Re₍ᵥₐₚ₎ or liquid phase Re_{(liq)} is higher than 2.000.000.

Successively the stream of polypropylene and evaporated propylene obtained at the outlet of the pipe 16 is sent to a flash tank 20, where the evaporated monomer is separated from the polymer particles. The tangential entry of the above stream ensures a gas/solid separation by centrifugal effect.

The flash tank 20 is operated at the pressure of 18 bar: the particles of solid polymer fall by gravity towards the bottom of the tank, while the gaseous phase exiting from the top is sent to the monomer recovery section. Polypropylene particles are discharged from the bottom of flash tank 20 and are conveyed to the downstream process equipment.

The above set-up of the polymerization plant was operated for a period of 7 days without having any fouling problems on the walls of flash chamber 20 and in the downstream process equipment.

Afterwards, the feed of ATMER163^{®} to the polymer slurry via line 15 was stopped and the same flow rate of ATMER 163^{®} was started to be fed to the polymer slurry via line 17, placed in correspondence of the jacketed pipe 16, as shown in Fig 1. This new set-up of the polymerization plant was operated for a period of 3 days: it was observed a malfunctioning in the polymer level control in the flash chamber 20, due to incipient formation of polymer sheeting on the walls of the flash chamber 20.

This example demonstrates that the feeding of an antistatic compound at a feeding point upstream the jacketed pipe 16 improves the degree of incorporation of the antifouling compound on the polymer particles, thus ensuring a reliable operability of the slurry polymerization plant.

### EXAMPLE 2

### Catalyst Activation and Prepolymerization

A random copolymer of polypropylene is produced by means of slurry polymerization of propylene and ethylene in a loop reactor:

The same Ziegler-Natta catalyst system of Example I is used as the polymerization catalyst with the same operative conditions in the catalyst activation step.

The activated catalyst discharged from the activation vessel was continuously fed to a prepolymerization loop reactor together with liquid propylene. The prepolymerization in the loop reactor is operated at a temperature of 20°C and a residence time of 10 minutes.

### Polymerization -

The prepolymerized catalyst was discharged from the loop prepolymerizator and was continuously fed via line 12 to loop reactor 10 of Fig. 1.

Propylene was polymerized in the loop reactor using H₂ as the molecular weight regulator. Liquid propylene at a flow rate of 24300 Kg/h was continuously fed to the loop reactor 10. Ethylene was also fed to the loop reactor 10 in an amount of 1.3% by weight with respect to propylene flow rate.

Make-up propylene, ethylene and hydrogen as molecular weight regulator were fed to the loop reactor 10 via line 25 and monomer make-up unit 24. The slurry polymerization was carried out at a temperature of 70°C and at a pressure of 3.4 MPa.

A slurry having a copolymer concentration of 55% by weight is discharged from the loop reactor 10, and continuously flows through the transfer line 14 comprising the steam jacketed pipe 16 having the length and diameters as indicated in Example 1.

Epoxidized soya oil sold under the trademark EDENOL D82^{®} is used as an anti-fouling agent in this example. This liquid compound is fed at a temperature of 40°C to the polymer slurry via line 15, located upstream the inlet of the jacketed pipe 16. EDENOL D82^{®} is fed in an amount of 4.8 Kg/h, corresponding to 19.7 x 10⁻⁵% by weight with respect to the propylene fed to the loop reactor 10.

After the addition with EDENOL D82^{®}, the polymer slurry enters the steam jacketed pipe 16, wherein it is heated up to reach a temperature of 85°C with consequent evaporation of the liquid phase. Accordingly, a tri-phase stream comprising solid polypropylene, liquid monomers and gaseous monomers, flows at a high velocity through the steam jacketed pipe 16.

Along the length of the jacketed pipe 16 the values of Reynolds number relative to the flow of liquid propylene (Re_{liq}) and the flow of gaseous propylene (Reᵥₐₚ) were calculated by a computer simulation: values of (Re_{liq}) and (Reᵥₐₚ) substantially similar to those of Example 1 were obtained.

Successively the stream of random copolymer and evaporated monomers obtained at the outlet of the pipe 16 is sent to a flash tank 20, operated at the pressure of 18 bar. The tangential entry of the above stream ensures a gas/solid separation also by centrifugal effect.

In the flash tank 20 the particles of solid polymer fall by gravity towards the bottom of the tank, while the gaseous monomers flow upwards to the top of the flash tank 20, from which are conveyed to the monomer recovery section.

The random copolymer is discharged from the bottom of flash tank 20 and is conveyed to the downstream process equipment.

The above set-up of the polymerization plant was operated for a period of 7 days without having any fouling problems on the walls of flash chamber 20 and in the downstream process equipment.

Afterwards, the feed of EDENOL D82^{®} to the polymer slurry via line 15 was stopped and the same flow rate of EDENOL D82^{®} was started to be fed to the polymer slurry via line 17, in correspondence of the jacketed pipe 16. This new set-up of the polymerization plant was operated for a period of 2.5 days: it was observed a malfunctioning in the polymer level control in the flash chamber 20, due to incipient formation of polymer sheeting on the walls of the flash chamber 20.

Also this example demonstrates that the feeding of an antistatic compound at a feeding point upstream the jacketed pipe 16 improves the degree of incorporation of the antifouling compound on the polymer particles, thus ensuring a reliable operability of the slurry polymerization plant.

## Claims

1. A process for the polymerization of olefins comprising:
a) polymerizing at least a liquid olefin monomer in a polymerization reactor to form a polymerization slurry comprising a polyolefin and said liquid monomer,
b) continuously transferring the polymerization slurry from the polymerization reactor to a flash chamber by means of a transfer line comprising a pipe where a turbulent flow of a tri-phase stream comprising polymer, liquid monomers, and gaseous monomers is established;
c) separating the evaporated monomer from the polymer in said flash chamber,
the process being **characterized in that** an anti-fouling agent in a liquid form is continuously introduced upstream the inlet of said pipe of step b) in an amount of from about 5 · 10⁻⁵ to 50 · 10⁻⁵ % bv weight with respect to the total monomers fed to the polymerization step a).

2. The process according to claim 1, wherein said turbulent flow in the pipe of step b) is such that at least one of the Reynolds numbers of vapour phase Re₍ᵥₐₚ₎ or liquid phase Re_{(liq)} is higher than 2.000.000.

3. The process according to claim 2, wherein in the pipe of step b) at least one of Re₍ᵥₐₚ₎ or Re_{(liq)} is comprised between 3.000.000 and 12.000.000.

4. The process according to claim 1, wherein the polymerization step a) is carried out in a loop reactor.

5. The process according to claim 1, wherein the polymerization step a) is carried 1out at a temperature from 60 to 90°C.

6. The process according to claim 1, wherein the polymerization step a) is carried out at a pressure from 22 to 50 bar.

7. The process according to claim 1, wherein the temperature inside the pipe of step b) is comprised between 80°C and 100°C.

8. The process according to claim 1, wherein the pressure in the flash chamber of step c) ranges from 12 to 24 bar.

9. Process according to claim 1, **characterised in that** said anti-fouling agent is selected from one or more of the following classes:
- alkyldiethanolammines of formula R-N(CH₂CH₂OH)₂ wherein R is an alkyl radical comprised between 10 and 20 carbon atoms, preferably between 12 and 18 carbon atoms;
- polyalcohols having from 4 to 8 carbon atoms;
- hydroxyesters with at least two free hydroxyl groups, obtained from carboxylic acids with from 8 to 22 carbon atoms and from polyalcohols;
- polyepoxidate unsaturated oils;
- amides of formula R-CONR'R", wherein R, R', and R" may be the same or different and is a saturated or unsaturated hydrocarbon radical having 1 to 22 carbon atoms.

10. Process according to claim 9, **characterised in that** said anti-fouling agent is an alkydiethanolamine, wherein the alkyl group has from 12 to 18 carbon atoms.

## Patentansprüche

1. Verfahren zur Polymerisation von Olefinen, mit den folgenden Schritten:
a) Polymerisieren mindestens eines flüssigen Olefinmonomers in einem Polymerisationsreaktor, um eine Polymerisationssuspension zu bilden, die ein Polyolefin und das flüssige Monomer umfasst;
b) kontinuierliches Überführen der Polymerisationssuspension von dem Polymerisationsreaktor zu einer Entspannungskammer mit Hilfe einer Überführungsleitung, die ein Rohr umfasst, in dem eine turbulente Strömung eines Dreiphasenstroms enthaltend Polymer, flüssige Monomere und gasförmige Monomere vorliegt;
c) Abtrennen des verdampften Monomers von dem Polymer in der Entspannungskammer;
wobei das Verfahren **dadurch gekennzeichnet ist, dass** ein Antifoulingmittel in flüssiger Form vor dem Einlass des Rohres von Schritt b) in einer Menge von etwa 5 · 10⁻⁵ bis 50 · 10⁻⁵ Gew.-% bezogen auf die Gesamtmenge der Polymerisationsschritt a) zugeführten Monomere kontinuierlich eingeleitet wird.

2. Verfahren nach Anspruch 1, wobei die turbulente Strömung in dem Rohr von Schritt b) dergestalt ist, dass mindestens eine der Reynolds-Zahlen der Dampfphase Re_{(Dampf)} oder Flüssigphase Re_{(flüssig)} höher ist als 2,000,000.

3. Verfahren nach Anspruch 2, wobei in dem Rohr von Schritt b) mindestens eines von Re_{(Dampf)} oder Re_{(flüssig)} im Bereich zwischen 3,000,000 und 12,000,000 liegt.

4. Verfahren nach Anspruch 1, wobei der Polymerisationsschritt a) in einem Schleifenreaktor durchgeführt wird.

5. Verfahren nach Anspruch 1, wobei der Polymerisationsschritt a) bei einer Temperatur von 60 bis 90°C durchgeführt wird.

6. Verfahren nach Anspruch 1, wobei der Polymerisationsschritt a) bei einem Druck von 22 bis 50 bar durchgeführt wird.

7. Verfahren nach Anspruch 1, wobei die Temperatur in dem Rohr von Schritt b) im Bereich zwischen 80°C und 100°C liegt.

8. Verfahren nach Anspruch 1, wobei der Druck in der Entspannungskammer von Schritt c) im Bereich von 12 bis 24 bar liegt.

9. Verfahren nach Anspruch 1, **dadurch gekennzeichnet, dass** das Antifoulingmittel aus einer oder mehreren der folgenden Klassen ausgewählt ist:
- aus Alkyldiethanolaminen der Formel R-N(CH₂CH₂OH)₂, worin R ein Alkylradikal mit 10 bis 20 Kohlenstoffatomen, vorzugsweise 12 bis 18 Kohlenstoffatomen ist;
- aus Polyalkoholen mit 4 bis 8 Kohlenstoffatomen;
- aus Hydroxyestem mit mindestens zwei freien Hydroxylgruppen, erhalten aus Carbonsäuren mit 8 bis 22 Kohlenstoffatomen und aus Polyalkoholen;
- aus ungesättigten polyepoxidierten Ölen;
- aus Amiden der Formel R-CONR'R", worin R. R' und R" gleich oder verschieden sein können und ein gesättigtes oder ungesättigtes Kohlenwasserstoffradikal mit 1 bis 22 Kohlenstoffatomen sind.

10. Verfahren nach Anspruch 9, **dadurch gekennzeichnet, dass** das Antifoulingmittel ein Alkyldiethanolamin ist, wobei die Alkalygruppe von 12 bis 18 Kohlenstoffatome hat.

## Revendications

1. Procédé de polymérisation d'oléfines comprenant :
a) la polymérisation d'au moins un monomère oléfinique liquide dans un réacteur de polymérisation pour former une suspension de polymérisation comprenant une polyoléfine et ledit monomère liquide ;
b) le transfert continu de la suspension de polymérisation du réacteur de polymérisation dans une chambre d'évaporation instantanée au moyen d'une canalisation de transfert comprenant un tuyau où un flux turbulent d'un courant à trois phases comprenant le polymère, des monomères liquides et des monomères gazeux est établi ;
c) la séparation du monomère évaporé du polymère dans ladite chambre d'évaporation instantanée ;
le procédé étant **caractérisé en ce qu'**un additif antidépôt sous forme liquide est introduit en continu en amont de l'entrée dudit tuyau de l'étape b) en une quantité d'environ 5 · 10⁻⁵ à 50 · 10⁻⁵% en poids par rapport à la totalité des monomères alimentée dans l'étape de polymérisation a).

2. Procédé selon la revendication 1, ledit flux turbulent dans le tuyau de l'étape b) étant tel qu'au moins un des nombres de Reynolds de la phase vapeur Re₍ᵥₐₚ₎ ou de la phase liquide Re_{(liq)} est supérieur à 2 000 000.

3. Procédé selon la revendication 2, au moins un parmi Re₍ᵥₐₚ₎ ou Re_{(liq)} dans le tuyau de l'étape b) étant compris entre 3 000 000 et 12 000 000.

4. Procédé selon la revendication 1, l'étape de polymérisation a) étant réalisée dans un réacteur à boucle.

5. Procédé selon la revendication 1, l'étape de polymérisation a) étant réalisée à une température de 60 à 90°C.

6. Procédé selon la revendication 1, l'étape de polymérisation a) étant réalisée à une pression de 22 à 50 bars.

7. Procédé selon la revendication 1, la température à l'intérieur du tuyau de l'étape b) étant comprise entre 80°C et 100°C.

8. Procédé selon la revendication 1, la pression dans la chambre d'évaporation instantanée de l'étape c) se trouvant dans la plage de 12 à 24 bars.

9. Procédé selon la revendication 1, **caractérisé en ce que** ledit additif antidépôt est choisi parmi l'une ou plusieurs des classes suivantes :
- les alkyldiéthanolamines de formule R-N(CH₂CH₂OH)₂, R représentant un radical alkyle comprenant entre 10 et 20 atomes de carbone, de préférence entre 12 et 18 atomes de carbone ;
- les polyalcools comprenant 4 à 8 atomes de carbone ;
- les hydroxyesters présentant au moins deux groupes hydroxyle libres, obtenus à partir d'acides carboxyliques comprenant 8 à 22 atomes de carbone et de polyalcools ;
- les huiles insaturées polyépoxydées ;
- les amides de formule R-CONR'R", R, R', et R" pouvant être identiques ou différents et représentant un radical hydrocarboné saturé ou insaturé contenant 1 à 22 atomes de carbone.

10. Procédé selon la revendication 9, **caractérisé en ce que** ledit additif antidépôt est une alkyldiéthanolamine, le groupe alkyle comprenant 12 à 18 atomes de carbone.
